# EUROPEAN PATENT SPECIFICATION

(11) **EP 2 075 049 B1**
(45) Date of publication and mention of the grant of the patent: **09.06.2010**
(21) Application number: 08172759.6
(22) Date of filing: 23.12.2008
(51) Int. Cl.: B01D 53/92, B03C 1/035, F01N 3/08, F02M 25/07

(54) **Method for separating gas components and separator for the same**
Verfahren zur Trennung von Gaskomponenten und Trenner dafür
Procédé pour la séparation de composants gazeux et séparateur correspondant

(30) Priority: 25.12.2007 JP 2007332323
(43) Date of publication of application: 01.07.2009
(73) Proprietor: KABUSHIKI KAISHA TOYOTA JIDOSHOKKI, Kariya-shi, Aichi-ken 448-8671 (JP)
(72) Inventor: Hoshi, Sakutaro, Aichi 448-8671 (JP); Yoshida, Koji, Aichi 448-8671 (JP); Kidokoro, Atsushi, Aichi 448-8671 (JP); Kawasaki, Shintaro, Aichi 448-8671 (JP)
(74) Representative: TBK-Patent

(56) References cited:
- DE-A1- 3 630 913
- JP-A- 1 178 713
- US-A- 4 142 874
- US-A- 4 261 711

## Description

The present invention relates to a method for separating gas components and a separator for separating the gas components. Specifically, in the method for separating the gas components and the separator, differences in magnetic susceptibility between the respective gas components are utilized in gas separation.

Paramagnetic materials include oxygen, nitrogen monoxide, and nitrogen dioxide, which are rare examples in gaseous substance. Japanese Unexamined Patent Publication No. 1-178713 discloses that the properties as paramagnetic materials are utilized in an exhaust gas treatment device for treating exhaust gas from a combustion engine, especially from an internal combustion engine. In the device, exhaust gas is cooled so as to increase magnetic susceptibilities of the components, thereby nitrogen oxides and oxygen are separated from the exhaust gas by a magnetic force, and returned to the combustion chamber.

However, in the exhaust gas treatment device in the above reference, oxygen and nitrogen oxides are not separated from each other and returned together to the combustion chamber. Therefore, oxygen concentration in the combustion chamber increases, and rapid combustion is occurred. The operational state of the combustion engine becomes unstable, accordingly.

Document US-A-4 261 711 A discloses a method and a separator as defined in the preambles of claims 1 and 6. In particular, this document discloses a magnetic separation apparatus which serves to mechanically separate an inert dielectric, non-magnetic, liquid carrying absorbed paramagnetic gases. This is achieved by providing a magnet, by means of which the paramagnetic gases are attracted.

Document US-A-4 142 874 discloses a method for separating gaseous nitrogen oxides from other gases by paramagnetic separation in a liquid media, wherein the characteristic that oxygen has a greater magnetic susceptibility than nitrogen oxide is utilized for separating both materials.

The present invention is directed to provide a method for separating gas including diamagnetic materials and paramagnetic materials containing oxygen and nitrogen oxides into diamagnetic materials, oxygen, and nitrogen oxides. The present invention is also directed to provide a separator for separating gas components.

This object is solved by a method as set out in claim 1 and by a separator as defined in claim 6.

Advantageous developments are defined in the dependent claims.

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a schematic view of an internal combustion engine provided with a separator for gas components according to a first preferred embodiment of the present invention;
Fig. 2 is an enlarged schematic view of the separator to explain gas flow according to the first preferred embodiment;
Fig. 3 is an enlarged schematic view of the separator according a second preferred embodiment; and
Fig. 4 is an enlarged schematic view of the separator according a third preferred embodiment.

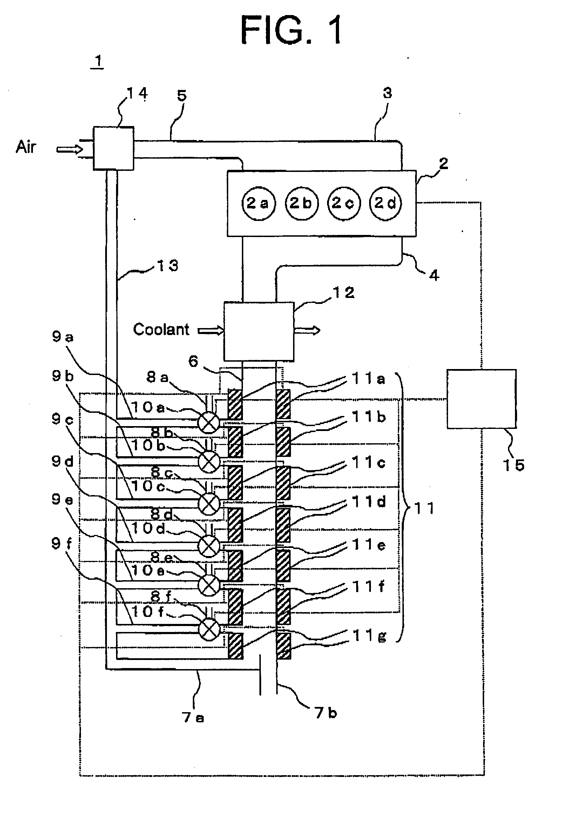

Fig. 1 shows a schematic view of a diesel engine 1 as an internal combustion engine including a separator for separating gas components. The diesel engine 1 is a four-cylinder type engine, and has a cylinder block 2 with combustion chambers 2a, 2b, 2c, and 2d formed in the cylinders, respectively. An intake manifold 3 and an exhaust manifold 4 are provided so as to communicate with the combustion chambers 2a, 2b, 2c, and 2d. The Intake manifold 3 is connected to an intake passage 5 into which air flows, The exhaust manifold 4 is connected to an exhaust passage 6 into which exhaust gas generated in the combustion chambers 2a, 2b, 2c, and 2d flows. The exhaust passage 6 serves as a gas passage. The intake manifold 3 and the intake passage 5 serve as intake members at the intake side. A mixer 14 is provided in the intake passage 5. A cooler 12 is provided in the exhaust passage 6 for cooling exhaust gas. Exhaust gas flowing through the exhaust passage 6 is cooled in the cooler 12 with coolant water delivered from a radiator which is not shown in the drawings.

Six flow passages 9a, 9b, 9c, 9d, 9e, and 9f as first flow passages are provided downstream of the cooler 12 In the exhaust passage 6 at regular intervals. Each of the flow passages 9a through 9f has one end that is separately connected to the exhaust passage 6. The flow passages 9a through 9f extend parallel to each other and perpendicular to the exhaust passage 6. The direction of the flow passages 9a, 9b, 9c, 9d, 9e, and 9f will be described later. The flow passages 9a through 9f are provided with corresponding exhaust branch passages 8a, 8b, 8c, 8d, 8e, and 8f, which are open to the outside of the diesel engine 1. Further, the flow passages 9a through 9f are provided with corresponding three-way valves 10a, 10b, 10c, 10d, 10e, and 10f, which serve as selecting devices. The three-way valves 10a through 10f are moved so as to select between a first state and a second state. In the first state, the flow passages 9a, 9b, 9c, 9d, 9e, and 9f respectively communicate with the exhaust branch passages 8a, 8b, 8c, 8d, 8e, and 8f, and the exhaust gas in the flow passages 9a, 9b, 9c, 9d, 9e, and 9f flows out through the exhaust branch passages 8a, 8b, 8c, 8d, 8e, and 8f. In the second state, the exhaust gas flows through the flow passages 9a, 9b, 9c, 9d, 9e, and 9f so as to be returned to the intake side. The downstream end of the exhaust passage 6 is branched into a first branch passage 7a and a second branch passage 7b. The first branch passage 7a is located closer to the flow passages 9a through 9f than the second branch passage 7b is. Each of the first branch passage 7a and the six flow passages 9a through 9f is connected to a circulation passage 13. The circulation passage 13 is connected to the mixer 14. That is, each of the first branch passage 7a and the six flow passages 9a through 9f is connected to the intake side through the circulation passage 13 and the mixer 14. The second branch passage 7b is open to the outside of the diesel engine 1.

An electromagnet assembly 11 as a magnetic device is provided along the exhaust passage 6 from the downstream of the cooler 12 to the first branch passage 7a. The electromagnet assembly 11 is divided into seven sets of electromagnets 11a, 11b, 11c, 11d, 11e, 11f, and 11g, and each set has two pieces so as to sandwich the exhaust passage 6. The electromagnets 11a are provided between an outlet of the cooler 12 and a connecting point of the flow passage 9a to the exhaust passage 6. The electromagnets 11 b are provided between the connecting point of the flow passage 9a to the exhaust passage 6 and a connecting point of the flow passage 9b to the exhaust passage 6. The electromagnets 11c are provided between the connecting point of the flow passage 9b to the exhaust passage 6 and a connecting point of the flow passage 9c to the exhaust passage 6. The electromagnets 11 d are provided between the connecting point of the flow passage 9c to the exhaust passage 6 and a connecting point of the flow passage 9d to the exhaust passage 6. The electromagnets 11e are provided between the connecting point of the flow passage 9d to the exhaust passage 6 and a connecting point of the flow passage 9e to the exhaust passage 6. The electromagnets 11f are provided between the connecting point of the flow passage 9e to the exhaust passage 6 and a connecting point of the flow passage 9f to the exhaust passage 6. The electromagnets 11g are provided between the connecting point of the flow passage 9f to the exhaust passage 6 and a connecting point to the first branch passage 7a to the exhaust passage 6.

The diesel engine 1 is provided with an ECU 15 as a controller The three-way valves 10a through 10f and the electromagnets 11a through 11g are respectively electrically connected to the ECU 15. The ECU 15 serves as a controller of the diesel engine 1 and also as a select controlling device for controlling the selecting operation of the three-way valves 10a through 10f. The ECU 15 also serves as a flow velocity detecting device, and estimates the flow velocity of the exhaust gas flowing through the exhaust passage 6, based on the information of the operational state of the diesel engine 1, such as the rotational speed. The ECU 15 also serves as a magnetic field intensity adjusting device for adjusting the magnetic field intensity of the electromagnets 11a through 11 g.

The following will describe the operation of the internal combustion engine having a separator according to the first preferred embodiment. When the diesel engine 1 is started up, air flowing through the intake passage 5 is introduced into the combustion chambers 2a, 2b, 2c, and 2d through the intake manifold 3. The air introduced into the combustion chambers 2a, 2b, 2c, and 2d is compressed by pistons (not shown), respectively, and diesel fuel is injected from an injection nozzle (not shown) into the combustion chambers 2a, 2b, 2c, and 2d. Then the combustion is achieved, and the exhaust gas is discharged from the combustion chambers 2a, 2b, 2c, and 2d into the exhaust manifold 4. When the exhaust gas from the exhaust manifold 4 flows through the exhaust passage 6, the exhaust gas is cooled by the heat exchange with the coolant water in the cooler 12. The lower the temperature of each component in the exhaust gas is, the greater each component is affected by magnetic fields. Therefore, the separation performance for separating each component is improved by providing the cooler 12, as described next.

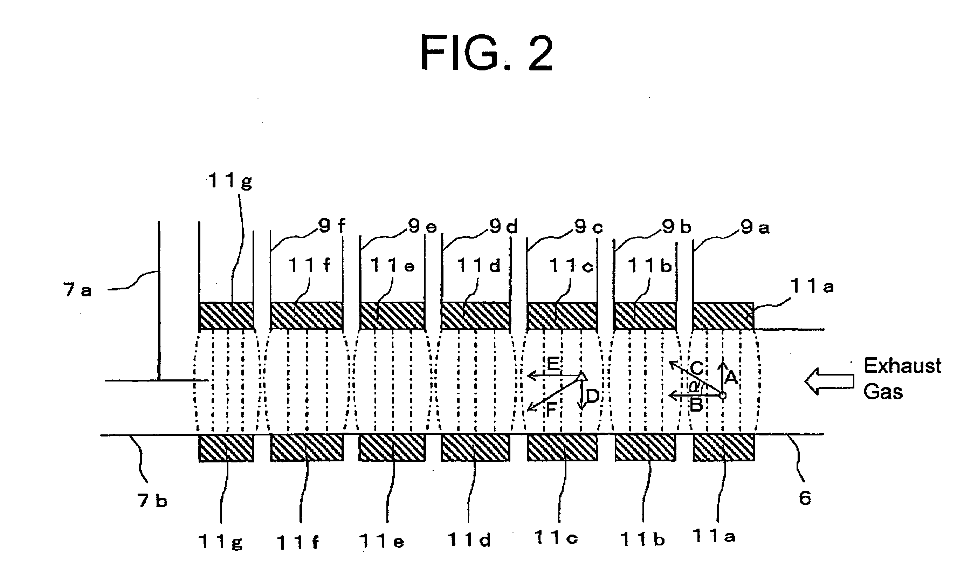

The exhaust gas cooled by the cooler 12 is affected by the magnetic fields of the electromagnets 11 a through 11 g in flowing through the exhaust passage 6. Generally, exhaust gas contains nitrogen oxides, such as nitrogen monoxide and nitrogen dioxide, nitrogen, oxygen, carbon monoxide, carbon dioxide, and the like. Nitrogen oxides and oxygen are paramagnetic materials, while the other components such as nitrogen, carbon monoxide, and carbon dioxide are diamagnetic materials. With the function of the magnetic fields of the electromagnets 11a through 11g, the direction that nitrogen oxides and oxygen are magnetized is reverse to the direction that the other components as diamagnetic materials are magnetized. In Fig. 2, the movement of molecular nitrogen oxides and oxygen as paramagnetic materials (indicated by a circle) is explained. The magnetic fields of the electromagnets 11a through 11g are indicated by dashed-dotted lines. With the function of the magnetic fields, nitrogen oxides and oxygen are urged by a force in the direction approaching to the flow passages 9a, 9b, 9c, 9d, 9e, and 9f (indicated by an arrow A). The force indicated by the arrow A and a force due to the gas flow in the exhaust passage 6 (indicated by an arrow B) compose a vector, thereby nitrogen oxides and oxygen are moved in the direction Indicated by an arrow C. As described above, the flow passages 9a through 9f extend parallel with each other and perpendicular to the exhaust passage 6. The flow passages 9a through 9f extend in the same direction as that of the arrow A, or, as the direction that the force due to the magnetic fields urges the paramagnetic materials. On the other hand, the other components as diamagnetic materials (indicated by a triangle) are urged by a force in the direction away from the flow passages 9a, 9b, 9c, 9d, 9e, and 9f (indicated by an arrow D). The force indicated by the arrow D and a force due to the flow in the exhaust passage 6 (indicated by an arrow E) compose a vector. The diamagnetic materials are moved in the direction indicated by an arrow F, accordingly.

The magnetic susceptibilities of oxygen, nitrogen monoxide, and nitrogen dioxide as the paramagnetic materials are 107µcm³/g, 49µcm³/g, and 3µcm³ /g, respectively. Oxygen, nitrogen monoxide, and nitrogen dioxide are separated with each other by utilizing such great differences in the magnetic susceptibility with each other. Oxygen with the greatest magnetic susceptibility has a great angle α of the arrow C with respect to the arrow B, thereby has a tendency to enter into the upstream flow passages 9a, 9b, and 9c, Nitrogen monoxide with the second greatest magnetic susceptibility has an angle α of the arrow C to the arrow B, which is smaller than that of oxygen, thereby has a tendency to enter into the downstream flow passages 9d, 9e, and 9f. Nitrogen dioxide with the smallest magnetic susceptibility has the smallest angle α of the arrow C to the arrow B. Nitrogen dioxide has a tendency to enter into the first branch passage 7a at the downstream end of the exhaust passage 6, while not easily entering into the flow passages 9a, 9b, 9c, 9d, 9e, and 9f. On the other hand, the diamagnetic materials do not enter into the flow passages 9a, 9b, 9c, 9d, 9e, and 9f nor into the first branch passage 7a, and enter into the second branch passage 7b at the downstream end of the exhaust passage 6. The diamagnetic materials are discharged to the outside of the diesel engine 1. Thus, by utilizing magnetic properties, the flow paths of oxygen, nitrogen monoxide, nitrogen dioxide, and the other components as the diamagnetic materials are separated so that such components are separated.

In normal state, it is not necessary to return oxygen to the intake side, and the three-way valves 10a, 10b, and 10c are in the first state that the flow passages 9a, 9b, and 9c are connected to the exhaust branch passages 8a, 8b, and 8c. The exhaust gas entering into the flow passages 9a, 9b, and 9c is discharged to the outside of the diesel engine 1 through the exhaust branch passages 8a, 8b, and 8c. The three-way valves 10d, 10e, and 10f are in the second state that the flow passages 9d, 9e, and 9f are connected to the intake side. Therefore, the exhaust gas entering into the passages 9d, 9e, and 9f flows through the circulation passage 13, and is mixed with the intake air in the mixer 14 to be introduced into the combustion chambers 2a, 2b, 2c, and 2d. Similarly, the exhaust gas which enters into the first exhaust branch passage 7a is introduced into the combustion chambers 2a, 2b, 2c, and 2d. Thus, exhaust gas with high concentration of nitrogen oxides is returned to the intake air, while oxygen is separated and removed from the exhaust gas to a maximum extent. By returning nitrogen oxides selectively to the intake air, it may be thought that the concentration of nitrogen oxides in the exhaust gas may gradually increase, however, such results do not occur. That is because the components of the intake air are not the main factor affecting the production amount of nitrogen oxides. The combustion temperature and the combustion speed mainly affect the production amount of nitrogen oxides, which is returned to the intake air, decomposed and regenerated through combustion in the combustion chambers 2a, 2b, 2c, and 2d, The concentration of nitrogen oxides in exhaust gas is ranging from several hundreds to several thousands ppm, and extremely low compared to nitrogen (80%) in the intake air. The concentration of nitrogen oxides in exhaust gas is determined by the operational state of the diesel engine 1, irrespective to the amount of nitrogen oxides returned. Therefore, by returning nitrogen oxides in exhaust gas to the intake air selectively, the concentration of nitrogen oxides to be discharged outside is reduced.

However, practically, the angle α of the arrow C with respect to the arrow B indicating the directions of nitrogen oxides and oxygen may vary in accordance with the flow velocity of the exhaust gas (which corresponds to the length of the arrow B and the arrow E). The components which enter into each of the flow passages 9a, 9b, 9c, 9d, 9e, and 9f may vary, accordingly In the embodiment, the ECU 15 estimates the amount of exhaust gas to be discharged, based on the operational state of the diesel engine 1, such as the engine speed, thereby calculating the flow velocity of the exhaust gas flowing through the exhaust passage 6. Based on the flow velocity, the ECU 15 adjusts each magnetic field intensity of the electromagnets 11a through 11g. That is, by adjusting the magnetic field intensity of the electromagnets 11 a through 11 g along the exhaust passage 6, the force which is resulted from the magnetic fields is adjusted to be applied to the gas components, accordingly. Therefore, oxygen enters mainly into the flow passages 9a, 9b, and 9c, nitrogen monoxide enters mainly into the passages 9d, 9e, and 9f, and nitrogen dioxide enters mainly into the first branch passage 7a.

It has been explained that oxygen is discharged to the outside of the diesel engine 1. However, in case of low oxygen concentration in the intake air, such as a case when the vehicle runs at high altitudes, the ECU 15 operates to move the three-way valves 10a, 10b, and 10c to the intake side, in accordance with the operational state of the diesel engine 1, thereby supplying oxygen to raise oxygen concentration in the intake air. The combustion conditions in the combustion chambers 2a, 2b, 2c, and 2d are improved, accordingly. The other components as the diamagnetic materials may be discharged to the outside. Alternatively, the diamagnetic materials may be utilized as an EGR gas (Exhaust Gas Recirculation, which means combustion utilizing recirculation of exhaust gas to the intake side so as to reduce nitrogen oxides in exhaust gas), since the diamagnetic materials contain mainly Inert gas components such as nitrogen, carbon dioxide, and the like. Though EGR gas in the conventional art usually contains oxygen, EGR gas in the present invention does not contain high oxygen, thereby being capable of efficient EGR operation and NOₓ reduction. Further, separated oxygen and nitrogen dioxide have high oxidizing performance, and may be utilized in removing PM (diesel particulate matter) from DPF (diesel particulate filter).

The separator according to the first preferred embodiment Includes the exhaust passage 6, the six flow passages 9a through 9f connected to the exhaust passage 6, and the electromagnet assembly 11 provided along the exhaust passage 6. The exhaust gas flowing through the exhaust passage 6 contains the diamagnetic materials and the paramagnetic materials including nitrogen oxides and oxygen. The six flow passages 9a through 9f extend in the same direction as that of the magnetic force which is applied to the paramagnetic materials in the exhaust gas due to the magnetic field of the electromagnet assembly 11, The paramagnetic materials in the exhaust gas flowing through the exhaust passage 6 enter into the flow passages 9a, 9b, 9c, 9d, 9e, and 9f. In entering into the flow passages 9a through 9f, the paramagnetic materials are urged to the flow passages 9a through 9f along the vector composed by the direction of the force of the magnetic field of the electromagnet assembly 11 and the flow direction. Further, the magnetic susceptibilities of oxygen, nitrogen monoxide, and nitrogen dioxide are greatly different with each other, thereby the angles thereof with respect to the flow passages 9a through 9f are different with each other. Therefore, the gas components which enter into each of the flow passages 9a, 9b, 9c, 9d, 9e, and 9f are differentiated. Exhaust gas is separated into oxygen, nitrogen oxides, and the other components as the diamagnetic materials, accordingly

Further, the ECU 15 estimates the flow velocity of the exhaust gas flowing through the exhaust passage 6, based on the information of the operational state of the diesel engine 1. In accordance with the flow velocity, the magnetic field intensities of the electromagnets 11 a through 11g are adjusted. Therefore, even when the operational state of the diesel engine 1 is changed, the components entering into the flow passages 9a, 9b, 9c, 9d, 9e, and 9f are controlled.

The exhaust passage 6 is provided with the cooler 12 upstream of the electromagnet assembly 11. The exhaust gas is cooled before being affected by the magnetic field of the electromagnet assembly 11, thereby increasing the effect of the magnetic field to each component, and the separation performance for each component is improved.

The downstream end of the exhaust passage 6 is branched into the first branch passage 7a and the second branch passage 7b. The first branch passage 7a is located on the near side of the flow passages 9a through 9f, and the second branch passage 7b is located on the far side of the flow passages 9a through 9f. Nitrogen oxides flow into the first branch passage 7a, and diamagnetic materials enter into the second branch passage 7b, The first branch passage 7a is connected to the intake member of the diesel engine 1, and nitrogen oxides in the exhaust gas are returned to the intake side of the diesel engine 1. Therefore, the concentration of nitrogen oxides in the exhaust gas is reduced,

The flow passages 9a through 9f are provided with the exhaust branch passages 8a through 8f, and the three-way valves 10a through 10f, respectively. The exhaust branch passages 8a through 8f are open to the outside of the diesel engine 1. Each of the three-way valves 10a through 10f selects the first state or the second state, respectively. In the first state, exhaust gas flowing through the flow passages 9a, 9b, 9c, 9d, 9e, and 9f is discharged to the outside through the exhaust branch passages 8a, 8b, 8c, 8d, 8e, and 8f. In the second state, exhaust gas flows through the flow passages 9a, 9b, 9c, 9d, 9e, and 9f. The ECU 15 controls the operation of each of the three-way valves 10a through 10f, separately. Therefore, even with high oxygen concentration in exhaust gas, air-fuel ratio of exhaust gas is capable of being controlled by separating and releasing oxygen in the exhaust gas in advance. An exhaust gas treatment system with low cost utilizing a three-way catalyst may be applied, accordingly Further, oxygen is capable of being returned to the intake side as required, and may be supplied to the intake air when oxygen concentration in intake air is low. When it is necessary to perform the EGR, the other components as the diamagnetic materials may be utilized as the EGR gas, thereby easily performing low oxygen operation. That is, by controlling the intake gas components of the diesel engine 1, the engine property of the diesel engine 1 is improved.

According to the first preferred embodiment, the ECU 15 adjusts the magnetic field intensity of the electromagnets 11 a through 11 g, based on the flow velocity of the exhaust gas flowing in the exhaust passage 6, however, It is not limited to the above embodiment. The operation of the three-way valves 10a through 10f may be controlled, based on the flow velocity so as to obtain a similar effect. In this case, the magnetic field intensities of the electromagnets 11 a through 11g are not necessary to be adjusted, and a permanent magnet with a constant magnetic field intensity may be utilized instead of the electromagnets 11 a through 11g,

The ECU 15 may adjust the magnetic field intensities of the electromagnets 11 a through 11 g, based on the exhaust gas temperature, instead of the flow velocity of the exhaust gas. Alternatively, the operation of the three-way valves 10a through 10f may be controlled based on the exhaust gas temperature. In this case, the ECU 15 is capable of estimating the exhaust gas temperature, based on the information of the operational state of the diesel engine 1, and the ECU 15 also serves as a temperature detecting device.

According to the first preferred embodiment, the ECU 15 commonly serves as the select controlling device, the flow velocity detecting device (or, the temperature detecting device), and the magnetic field intensity adjusting device. However, separate devices may be utilized to serve the above devices respectively. In this case, a flow meter may be provided in the exhaust passage 6 as the flow velocity detecting device. A thermometer may be provided in the exhaust passage 6 as the temperature detecting device. A device as the select controlling device may be provided for moving the three-way valves 10a through 10f based on the data detected by the flow meter or the thermometer Alternatively, a device for adjusting the magnetic field intensity of the electromagnets 11a through 11g may serve as the magnetic field intensity adjusting device, based on the data detected by the flow meter or the thermometer.

According to the first preferred embodiment, the exhaust passage 6 is in the form of a straight tube, however, the form of the exhaust passage 6 is not limited, and may be formed of a nonlinear shape, such as a spiral shape, a meander shape, a loop shape, and the like. Further, part of the exhaust passage 6 may be formed of the above shapes, as well as the entire exhaust passage 6 is formed of the above shapes. By forming the exhaust passage 6 with such a shape, the exhaust passage 6 is elongated, thereby increasing the range for providing the electromagnet assembly 11 and also increasing the number of flow passages. Therefore, the separation performance for separating exhaust gas is improved.

According to the first preferred embodiment, oxygen enters mainly into the flow passages 9a, 9b, and 9c, and nitrogen monoxide enters mainly into the passages 9d, 9e, and 9f, and nitrogen dioxide enters mainly into the first branch passage 7a. Such a differentiation of the gas components is made so as to clarify between the upstream passages and the downstream passages for the sake of simple explanation, and oxygen, nitrogen monoxide, and nitrogen dioxide do not necessarily enter into the flow passages 9a through 9f and the first branch passage 7a in the above described manner. For example, oxygen may enter mainly into the flow passages 9a, 9b, nitrogen monoxide may enter mainly into the passages 9c, 9d, and 9e, and nitrogen dioxide may enter mainly into the flow passage 9f and the first branch passage 7a. Oxygen, nitrogen monoxide, and nitrogen dioxide are appropriately separated in any setting, as long as that the operations of the three-way valves 10a through 10f are performed in accordance with the differentiation of the components.

Next will describe an internal combustion engine provided with a separator according to a second preferred embodiment. Like or same parts or elements will be indicated by the same reference numeral as those which are used in the first embodiment and the explanation thereof will be omitted. The internal combustion engine provided with the separator according to the second embodiment differs from the first embodiment in that a permanent magnet is utilized as a magnetic material, and in that an oxygen concentration detecting device is provided in the flow passages 9a through 9f, respectively.

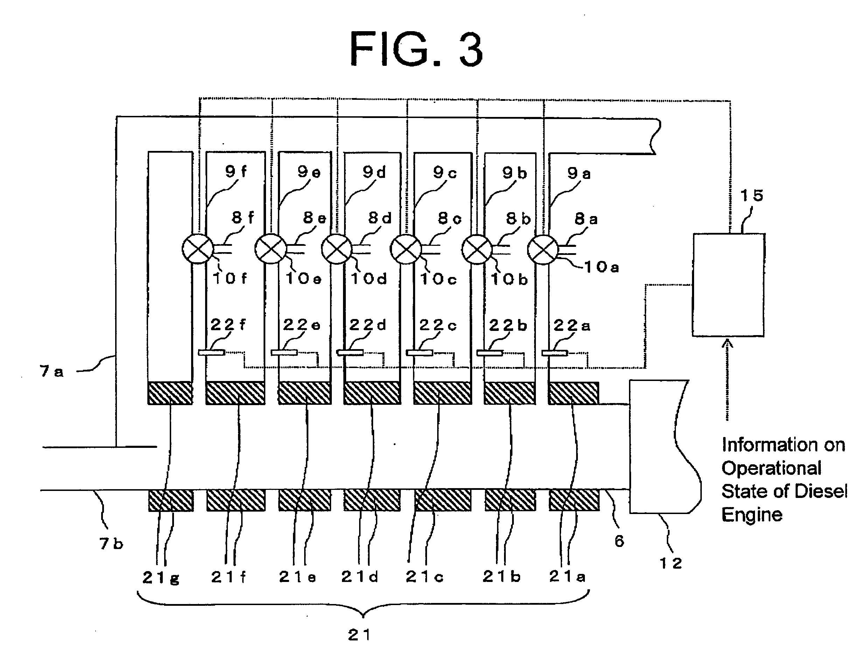

As shown in Fig. 3, the flow passages 9a through 9f are provided with oxygen sensors 22a, 22b, 22c, 22d, 22e, and 22f as oxygen concentration detecting devices at the upstream of the three-way valves 10a through 10f. The oxygen sensors 22a through 22f are electrically connected to the ECU 15, respectively A permanent magnet assembly 21 as a magnetic device is provided at the downstream of the cooler 12 along the exhaust passage 6 between the cooler 12 and the first branch passage 7a. The permanent magnet assembly 21 is divided into seven sets of permanent magnets 21a, 21b, 21c, 21d, 21e, 21f, and 21 g, and each set has two pieces so as to sandwich the exhaust passage 6. The permanent magnets 21 a are provided between an outlet of the cooler 12 and at a connecting point of the flow passage 9a to the exhaust passage 6. The permanent magnets 21 b are provided between the connecting point of the flow passage 9a to the exhaust passage 6 and a connecting point of the flow passage 9b to the exhaust passage 6. The permanent magnets 21 c are provided between the connecting point of the flow passage 9b to the exhaust passage 6 and a connecting point of the flow passage 9c to the exhaust passage 6. The permanent magnets 21 d are provided between the connecting point of the flow passage 9c to the exhaust passage 6 and a connecting point of the flow passage 9d to the exhaust passage 6. The permanent magnets 21 e are provided between the connecting point of the flow passage 9d to the exhaust passage 6 and a connecting point of the flow passage 9e to the exhaust passage 6. The permanent magnets 21f are provided between the connecting point of the flow passage 9e to the exhaust passage 6 and a connecting point of the flow passage 9f to the exhaust passage 6. The permanent magnets 21 g are provided between the connecting point of the flow passage 9f to the exhaust passage 6 and a connecting point of the first branch passage 7a to the exhaust passage 6. Other structures are the same as the first preferred embodiment.

Similar to the first embodiment, with the function of the magnetic fields of the permanent magnets 21 a through 21 g, oxygen, nitrogen monoxide, nitrogen dioxide in the exhaust gas flowing through the exhaust passage 6 selectively enter into mainly any passage among of the flow passages 9a through 9f and the first branch passage 7a. The other components as the diamagnetic materials enter into the second branch passage 7b. The oxygen sensors 22a through 22f detect the oxygen concentration of the exhaust gas entering into the flow passages 9a through 9f. When the detected oxygen concentrations in the exhaust gas in the flow passages 9a through 9f are higher than the value predetermined by the ECU 15, the ECU 15 operates to move the corresponding three-way valve among the three-way valves 10a through 10f to an exhaust side on which the flow passages 9a through 9f are connected to the exhaust branch passages 8a through 8f. On the other hand, when the detected oxygen concentrations in the exhaust gas in the flow passages 9a through 9f are lower than the value predetermined by the ECU 15, the ECU 15 operates to move the corresponding three-way valve among the three-way valves 10a through 10f to an intake side on which the flow passages 9a through 9f are connected to the intake member of the diesel engine 1. Therefore, the exhaust gas with high oxygen concentration is discharged to the outside of the diesel engine 1, and the exhaust gas with low oxygen concentration is retuned to the intake side. When the oxygen concentration in the intake air is low, the ECU 15 controls to move the corresponding three-way valve of the flow passage into which the exhaust gas with high oxygen concentration enters so as to supply oxygen into the intake air,

The flow passages 9a through 9f are provided with the oxygen sensors 22a through 22f for detecting the oxygen concentrations of the exhaust gas flowing in the corresponding flow passages 9a through 9f. The ECU 15 controls the operation of the three-way valves 10a through 10f, based on the oxygen concentrations detected by the oxygen sensors 22a through 22f. Therefore, only the exhaust gas with oxygen concentration lower than a predetermined value is returned to the intake side of the diesel engine 1, thereby obtaining the similar effects to the first embodiment, Further, when the oxygen concentration is low in the intake air, the exhaust gas with oxygen concentration higher than a predetermined value may be returned to the intake side, similar to the first embodiment.

The following will describe an internal combustion engine provided with a separator according to a third preferred embodiment. In the third embodiment, the exhaust passage 6 is provided with second flow passages whose flow directions are opposite to the flow directions of the flow passages 9a, 9b, 9c, 9d, 9e, and 9f of the first embodiment.

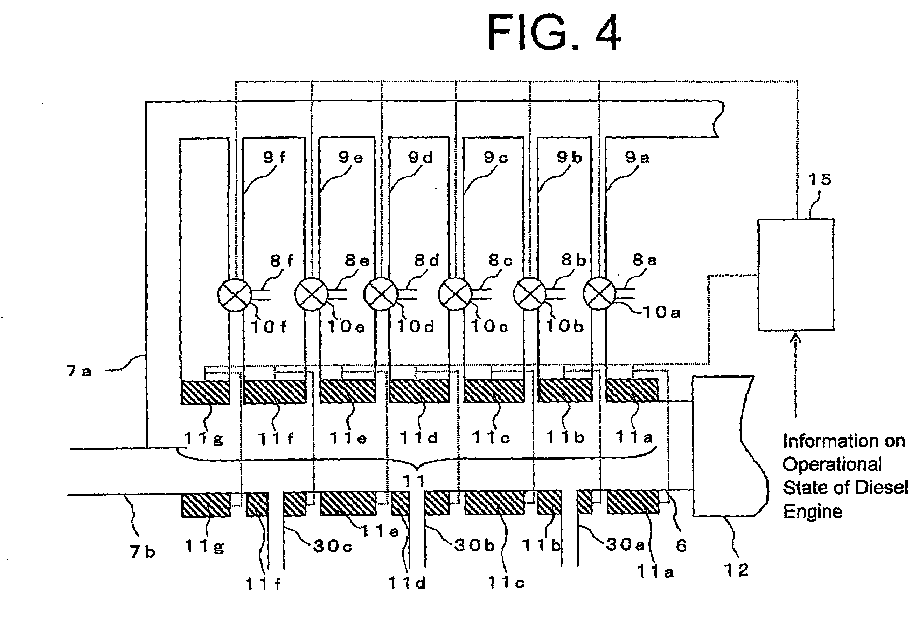

As shown in Fig. 4, the exhaust passage 6 is provided with three second flow passages 30a, 30b, and 30c. Each of the second flow passages 30a, 30b, and 30c has one end that is separately connected to the exhaust passage 6. The flow directions of the second flow passages 30a, 30b, and 30c are opposite to the flow directions of the flow passages 9a, 9b, 9c, 9d, 9e, and 9f. In other words, the second flow passages 30a, 30b, and 30c extend in such a direction that a force due to the magnetic fields of the electromagnets 11 a through 11 g is applied to the diamagnetic materials. The second flow passages 30a, 30b, and 30c are arranged in parallel to each other and perpendicular to the exhaust passage 6. Other structures are the same as the first embodiment.

With the similar way as the first embodiment, oxygen, nitrogen monoxide, and nitrogen dioxide in the exhaust gas flowing in the exhaust passage 6 are separated. On the other hand, the other components as the diamagnetic materials flow through the exhaust passage 6 while inclining to the second flow passages 30a, 30b, and 30c by the magnetic fields of the electromagnets 11 a through 11g, thereby entering into the second flow passages 30a, 30b, and 30c. The residual components which do not enter into the second flow passages 30a, 30b, and 30c enter into the second branch passage 7b. Different components respectively enter into the second flow passages 30a, 30b, and 30c, due to the differences in the magnetic susceptibility of each component forming the diamagnetic materials. Therefore, the components forming the diamagnetic materials are respectively separated to each other.

In the above explanation of the third embodiment, the connections of the second flow passages 30a, 30b, and 30c are not specifically described. The second flow passages 30a, 30b, and 30c may be open to the outside of the diesel engine 1, or connected to the intake member of the diesel engine 1. The second flow passages 30a, 30b, and 30c may be provided with three-way valves, respectively, which are moved so as to deliver the exhaust gas in the second flow passages 30a, 30b, and 30c to any destination, based on the operational state of the diesel engine 1.

The first through third embodiments are described by specifying the numbers of each parts. Especially, the numbers are specified with respect to the passages 8a through 8f and 9a through 9f, the three-way valves 10a through 10f, and the magnets 11a through 11f and 21a through 21g, the oxygen sensors 22a through 22f, and the second flow passages 30a through 30c. The numbers of the above-described parts are merely examples, and may be changed appropriately. In the second embodiment, feedback control for operating three-way valves 10a through 10f is respectively based on the oxygen concentrations detected by the oxygen sensors 22a through 22f. The control may be performed in such a manner that the oxygen concentration in the operational state of the diesel engine 1 is in advance detected, and that the oxygen concentration is estimated, based on the operational state of the diesel engine 1 without using the oxygen sensors.

In the first through third embodiments, the in-line four-cylinder diesel engine 1 is utilized as an internal combustion engine. However, any type of diesel engine, or, any form of gasoline-powered engine and boiler may be utilized. The method for separating gas components and the separator according to the present invention are applied not only for the purpose of separating exhaust gas generated in the combustion engine, but also for any purpose, as long as separating gas including diamagnetic materials and paramagnetic materials containing nitrogen oxides and oxygen into diamagnetic materials, nitrogen oxides, and oxygen.

Therefore, the present examples and embodiments are to be considered as illustrative and not restrictive, and the invention is not to be limited to the details given herein but may be modified within the scope of the appended claims.

A method is provided for separating gas including diamagnetic materials and paramagnetic materials containing nitrogen oxides and oxygen into diamagnetic materials, nitrogen oxides, and oxygen. The method includes steps of providing a magnetic device along a gas passage, and providing a plurality of flow passages. Each flow passage has one end that is separately connected to the gas passage. The flow passages extend In a direction that a force due to a magnetic field of the magnetic device is applied to the paramagnetic materials in the gas. The method further includes a step of allowing the gas to flow into the flow passages so that nitrogen oxides and oxygen in the gas enter into a corresponding flow passage among the plurality of the flow passages.

## Claims

1. A method for separating gas which includes diamagnetic materials and paramagnetic materials containing nitrogen oxides and oxygen into diamagnetic materials, nitrogen oxides and oxygen, comprising the step of:
providing a magnetic device (**11, 11a, 11b, 11c, 11d, 11e, 11f, 11g, 21, 21 a, 21 b, 21 c, 21 d, 21 e, 21f**) along a gas passage (**6**);
the method being **characterized by** comprising the steps of:
providing a plurality of flow passages (**9a, 9b, 9c, 9d, 9e, 9f**) along a gas-flow direction of the gas passage at intervals, each flow passage having one end that is separately connected to the gas passage (**6**), wherein each flow passage (**9a, 9b, 9c, 9d, 9e, 9f**) extends in a direction in which a force due to a magnetic field of the magnetic device (**11, 11a, 11 b, 11 c, 11 d, 11e, 11f, 21, 21 a, 21 b, 21 c, 21 d, 21 e, 21f**) is applied to the paramagnetic materials in the gas; and
allowing the gas to flow into the flow passages (**9a, 9b, 9c, 9d, 9e, 9f**) so that nitrogen oxides and oxygen in the gas enter into corresponding separate flow passages among the plurality of the flow passages (**9a, 9b, 9c, 9d, 9e, 9f**).

2. The method according to claim 1, **characterized by** steps of:
detecting flow velocity of the gas; and
adjusting magnetic field intensity of the magnetic device (**11, 11a, 11b, 11c, 11 d, 11e, 11 f, 11 g**) along the gas passage (**6**) in accordance with the flow velocity of the gas.

3. The method according to claim 1, **characterized by** steps of:
detecting temperature of the gas; and
adjusting magnetic field intensity of the magnetic device (**11, 11a, 11 b, 11c, 11 d, 11e, 11f, 11g**) along the gas passage (**6**) in accordance with the temperature of the gas.

4. The method according to any one of claims 1 through 3, **characterized by** cooling the gas before allowing the gas to flow along the magnetic device (**11, 11a, 11b, 11c, 11d, 11e, 11f, 11g, 21, 21 a, 21 b, 21c, 21 d, 21 e, 21f**).

5. The method according to any one of claims 1 through 4, **characterized in that** the gas is generated in an internal combustion engine (**1**), wherein the method **characterized by** a step of returning nitrogen oxides, oxygen, and diamagnetic materials independently to an intake side (**3, 5**) of the combustion engine (**1**).

6. A separator for separating gas, which includes diamagnetic materials and paramagnetic materials containing nitrogen oxides and oxygen into diamagnetic materials, nitrogen oxides, and oxygen,
wherein the separator includes a gas passage (**6**), a magnetic device (**11, 11 a, 11b, 11c, 11d, 11e, 11f, 11g, 21, 21a, 21 b, 21c, 21d, 21e, 21f**), and a plurality of flow passages (**9a, 9b, 9c, 9d, 9e, 9f**), and
wherein the magnetic device (**11, 11a, 11b, 11c, 11d, 11e, 11 f, 11g, 21, 21 a, 21b, 21 c, 21 d, 21 e, 21f**) generates a magnetic field along the gas passage (**6**),
**characterized in that**
each of the flow passages (**9a, 9b, 9c, 9d, 9e, 9f**) provided along a gas-flow direction of the gas passage at intervals has one end that is separately connected to the gas passage (**6**), wherein each flow passage (**9a, 9b, 9c, 9d, 9e, 9f**) extends in a direction in which a force due to the magnetic field of the magnetic device (**11, 11a, 11b, 11c, 11d, 11e, 11f, 11g, 21, 21a, 21b, 21 c, 21d, 21e, 21f**) is applied to the paramagnetic materials in the gas.

7. The separator according to claim 6, **characterized in that** the magnetic device is formed of an electromagnet (**11, 11a, 11 b, 11c, 11d, 11e, 11 f, 11g),**
wherein the separator further includes a flow velocity detecting device (**15**) and a magnetic field intensity adjusting device (**15**),
wherein the flow velocity detecting device (**15**) detects flow velocity of the gas in the gas passage (**6**),
wherein the magnetic field intensity adjusting device (**15**) adjusts magnetic field intensity of the electromagnet (**11, 11a, 11 b, 11c, 11d, 11e, 11f, 11 g**) along the gas passage (**6**), based on the flow velocity of the gas.

8. The separator according to claim 6, **characterized in that** the magnetic device is formed of an electromagnet (**11, 11a, 11 b, 11c, 11d, 11e, 11f, 11g**),
wherein the separator further includes a temperature detecting device (**15**) and a magnetic field intensity adjusting device (**15**),
wherein the temperature detecting device (**15**) detects temperature of the gas in the gas passage (**6**),
wherein the magnetic field intensity adjusting device (**15**) adjusts magnetic field intensity of the electromagnet (**11, 11a, 11b, 11c, 11d, 11e, 11f, 11g**) along the gas passage (**6**), based on the temperature of the gas.

9. The separator according to any one of claims 6 through 8, **characterized in that** a second flow passage (**30a, 30b, 30c**) is formed in such a manner that a flow direction of the second flow passage (**30a, 30b, 30c**) is opposite to a flow direction of the flow passages (**9a, 9b, 9c, 9d, 9e, 9f**).

10. The separator according to any one of claims 6 through 9, **characterized in that** the gas passage (**6**) or a part of the gas passage is formed of a non-linear shape.

11. The separator according to any one of claims 6 through 10, **characterized in that** a cooler (**12**) is provided in the gas passage (**6**) upstream of the magnetic device (**11, 11a, 11b, 11c, 11d, 11e, 11f, 11g, 21, 21a, 21b, 21c, 21d, 21e, 21f, 21g**).

12. The separator according to any one of claims 6 through 11, **characterized in that** the gas is generated in an internal combustion engine (**1**) and the gas passage is an exhaust passage (**6**),
wherein one end of the exhaust passage (**6**) is connected to the internal combustion engine (**1**) and the other end of the exhaust passage (**6**) is branched into a first branch passage (**7a**) and a second branch passage (**7b**),
wherein the first branch passage (**7a**) is located nearer to the flow passages (9a, 9b, **9c,** 9d, **9e,** 9f) than second branch passage (**7b**),
wherein the first branch passage (**7a**) is connected to an intake member (**3, 5**) of the internal combustion engine (**1**).

13. The separator according to claim 12, **characterized in that** each flow passage (**9a, 9b, 9c, 9d, 9e, 9f**) has an exhaust branch passage (**8a, 8b, 8c, 8d, 8e, 8f**) and a selecting device (**10a, 10b, 10c, 10d, 10e, 10f),**
wherein the exhaust branch passage (**8a, 8b, 8c, 8d, 8e, 8f**) is open to the outside of the internal combustion engine (**1**),
wherein the selecting device **(10a, 10b, 10c, 10d, 10e, 10f**) selects between a first state that the gas in the flow passage (**9a, 9b, 9c, 9d, 9e, 9f**) is discharged through the exhaust branch passage (**8a, 8b, 8c, 8d, 8e, 8f**) and a second state that the gas flows through the flow passage (**9a, 9b, 9c, 9d, 9e, 9f**),
wherein the separator further includes a select controlling device (**15**) for controlling the selecting operation of the selecting device (**10a, 10b, 10c, 10d, 10e, 10f**).

14. The separator according to claim 13, **characterized in that** each flow passage (**9a, 9b, 9c, 9d, 9e, 9f**) has an oxygen concentration detecting device (**22a, 22b, 22c, 22d, 22e, 22f**) for detecting the oxygen concentration in the exhaust gas flowing in the flow passage (**9a, 9b, 9c, 9d, 9e, 9f**),
wherein the select controlling device (15) operates the selecting device (**10a, 10b, 10c, 10d, 10e, 10f**) based on the oxygen concentration detected by the oxygen concentration detecting device (**22a, 22b, 22c, 22d, 22e, 22f**).

15. The separator according to any one of claims 6 through 11, **characterized in that** the gas is generated in an internal combustion engine (**1**) and each flow passage (**9a, 9b, 9c, 9d, 9e, 9f**) has an exhaust branch passage (**8a, 8b, 8c, 8d, 8e, 8f**) and a selecting device **(10a, 10b, 10c, 10d, 10e, 10f),**
wherein each exhaust branch passage (8a, 8b, 8c, 8d, 8e, 8f) is open to the outside of the internal combustion engine (**1**),
wherein the selecting device **(10a, 10b, 10c, 10d, 10e, 10f**) selects between a first state that the gas in the flow passage (**9a, 9b, 9c, 9d, 9e, 9f**) is discharged through the exhaust branch passage (**8a, 8b, 8c, 8d, 8e, 8f**) and a second state that the gas flows through the flow passage (**9a, 9b, 9c, 9d, 9e, 9f**),
wherein the separator further includes a select controlling device (**15**) for controlling the selecting operation of the selecting device (**10a, 10b, 10c, 10d, 10e, 10f**).

## Patentansprüche

1. Verfahren zum Trennen von Gas, das diamagnetische Materialien und paramagnetische Materialien aufweist, die Stickstoffoxide und Sauerstoff enthalten, in diamagnetische Materialien, Stickstoffoxide und Sauerstoff, mit dem Schritt
Bereitstellen einer Magnetvorrichtung (**11, 11a, 11b, 11c, 11d, 11e, 11f, 11g, 21, 21a, 21b, 21c, 21d, 21e, 21f**) entlang eines Gaskanals (**6**),
wobei das Verfahren **gekennzeichnet ist durch** die Schritte:
Breitstellen einer Vielzahl von Strömungskanälen (**9a, 9b, 9c, 9d, 9e, 9f**) entlang einer Gasströmungsrichtung in Intervallen, wobei jeder Strömungskanal (**9a, 9b, 9c, 9d, 9e, 9f**) ein Ende aufweist, das getrennt mit dem Gaskanal (**6**) verbunden ist, wobei jeder Strömungskanal sich in eine Richtung erstreckt, in die eine Kraft aufgrund eines Magnetfeldes der Magnetvorrichtung (**11, 11a, 11 b, 11 c, 11 d, 11e, 11f, 21, 21 a, 21 b, 21 c, 21 d, 21 e, 21f**) auf die paramagnetischen Materialien in dem Gas beaufschlagt wird, und
Zulassen, dass das Gas in die Strömungskanäle (**9a, 9b, 9c, 9d, 9e, 9f**) derart strömt, dass Stickstoffoxide und Sauerstoff in dem Gas in die entsprechenden getrennten Strömungskanäle unter der Vielzahl der Strömungskanäle (**9a, 9b, 9c, 9d, 9e, 9f**) eintreten.

2. Verfahren nach Anspruch 1, **gekennzeichnet durch** die Schritte:
Erfassen einer Strömungsgeschwindigkeit des Gases und
Justieren einer Magnetfeldstärke der Magnetvorrichtung (**11, 11a, 11b, 11c, 11 d, 11e, 11f, 11g)** entlang des Gaskanals (**6**) entsprechend der Strömungsgeschwindigkeit des Gases.

3. Verfahren nach Anspruch 1, **gekennzeichnet durch** die Schritte:
Erfassen der Temperatur des Gases und
Justieren der Magnetfeldstärke der Magnetvorrichtung (11, **11a, 11b, 11c, 11d, 11e, 11f, 11g)** entlang des Gaskanals (**6**) entsprechend der Temperatur des Gases.

4. Verfahren nach einem der Ansprüche 1 bis 3, **gekennzeichnet durch** Kühlen des Gases, bevor zugelassen wird, dass das Gas entlang der Magnetvorrichtung (**11, 11a, 11b, 11c, 11d, 11e, 11f, 11g, 21, 21a, 21 b, 21c, 21d, 21e, 21f**) strömt.

5. Verfahren nach einem der Ansprüche 1 bis 4, **dadurch gekennzeichnet, dass** das Gas in einer Brennkraftmaschine (**1**) erzeugt wird, wobei das Verfahren **gekennzeichnet ist durch** einen Schritt des voneinander unabhängigen Zurückführens von Stickstoffoxid, Sauerstoff und diamagnetischen Materialien zu einer Einlassseite (**3, 5**) der Brennkraftmaschine (**1**).

6. Trenner zum Trennen von Gas, das magnetische Materialien und paramagnetische Materialien enthält, die Sauerstoffoxide und Sauerstoff enthalten, in diamagnetische Materialien, Stickstoffoxide und Sauerstoff,
wobei der Trenner einen Gaskanal (6), eine Magnetvorrichtung (**11, 11a, 11b, 11c, 11d, 11e, 11f, 11g, 21, 21a, 21b, 21c, 21d, 21e, 21f**) und eine Vielzahl von Strömungskanälen (**9a, 9b, 9c, 9d, 9e, 9f**) aufweist, und
wobei die Magnetvorrichtung (**11**, **11a, 11b, 11c, 11d, 11e, 11f, 11g, 21, 21a, 21b, 21c, 21d, 21e, 21f**) ein Magnetfeld entlang des Gaskanals (6) erzeugt,
**dadurch gekennzeichnet, dass**
jeder der Strömungskanäle (**9a, 9b, 9c, 9d, 9e, 9f**), die entlang einer Gasströmungsrichtung des Gaskanals in Intervallen vorgesehen sind, ein Ende aufweist, das getrennt mit dem Gaskanal (6) verbunden ist, wobei jeder Strömungskanal (**9a, 9b, 9c, 9d, 9e, 9f**) sich in eine Richtung erstreckt, in der eine Kraft aufgrund des Magnetfeldes der Magnetvorrichtung (**11, 11a, 11b, 11c, 11d, 11e, 11f, 11g, 21, 21a, 21b, 21 c, 21d, 21e, 21f**) auf die paramagnetischen Materialien in dem Gas beaufschlagt wird.

7. Trenner nach Anspruch 6, **dadurch gekennzeichnet, dass** die Magnetvorrichtung aus einem Elektromagneten (**11, 11a, 11 b, 11c, 11d, 11e, 11f, 11g)** gebildet ist,
wobei der Trenner weiterhin eine Strömungsgeschwindigkeitserfassungsvorrichtung (**15**) und eine Magnetfeldstärkejustierungsvorrichtung (**15**) aufweist,
wobei die Strömungsgeschwindigkeitserfassungsvorrichtung (**15**) eine Strömungsgeschwindigkeit des Gases in dem Gaskanal (**6**) erfasst,
wobei die Magnetfeldstärkejustierungsvorrichtung (**15**) eine Magnetfeldstärke des Elektromagneten (**11, 11a, 11b, 11c, 11d, 11e, 11f, 11g)** entlang des Gaskanals (**6**) auf der Grundlage der Strömungsgeschwindigkeit des Gases justiert.

8. Trenner nach Anspruch 6, **dadurch gekennzeichnet, dass** die Magnetvorrichtung aus einem Elektromagneten (**11, 11a, 11b, 11c, 11d, 11e, 11f, 11g)** gebildet ist,
wobei der Trenner weiterhin eine Temperaturerfassungsvorrichtung (**15**) und eine Magnetfeldstärkejustierungsvorrichtung (**15**) aufweist,
wobei die Temperaturerfassungsvorrichtung (**15**) eine Temperatur des Gases in dem Gaskanal (**6**) erfasst,
wobei die Magnetfeldstärkejustierungsvorrichtung (**15**) eine Magnetfeldstärke des Elektromagneten (**11, 11a, 11b, 11c, 11d, 11e, 11f, 11g)** entlang des Gaskanals (**6**) auf der Grundlage der Temperatur des Gases justiert.

9. Trenner nach einem der Ansprüche 6 bis 8, **dadurch gekennzeichnet, dass** ein zweiter Strömungskanal (**30a, 30b, 30c**) derart gebildet ist, dass eine Strömungsrichtung des zweiten Strömungskanals (**30a, 30b, 30c**) entgegengesetzt zu einer Strömungsrichtung der Strömungskanäle (**9a, 9b, 9c, 9d, 9e, 9f**) ist.

10. Trenner nach einem der Ansprüche 6 bis 9, **dadurch gekennzeichnet, dass** der Gaskanal (**6**) oder ein Teil des Gaskanals in einer nichtlinearen Form geformt ist.

11. Trenner nach einem der Ansprüche 6 bis 10, **dadurch gekennzeichnet, dass** eine Kühleinrichtung (**12**) in dem Gaskanal (**6**) stromaufwärts von der Magnetvorrichtung (**11, 11a, 11b, 11c, 11d, 11e, 11f, 11g, 21, 21a, 21b, 21c, 21d, 21e, 21f, 21g**) vorgesehen ist.

12. Trenner nach einem der Ansprüche 6 bis 11, **dadurch gekennzeichnet, dass** das Gas in einer Brennkraftmaschine (**1**) erzeugt wird und der Gaskanal ein Abgaskanal (**6**) ist,
wobei ein Ende des Abgaskanals (**6**) mit der Brennkraftmaschine (**1**) verbunden ist, und das andere Ende des Abgaskanals (**6**) in einen ersten Zweigkanal (**7a**) und einen zweiten Zweigkanal (**7b**) verzweigt ist,
wobei der erste Zweigkanal (**7a**) näher an den Strömungskanälen (**9a, 9b, 9c, 9d, 9e, 9f**) als an den zweiten Zweigkanal (**7b**) angeordnet ist,
wobei der erste Zweigkanal (**7a**) mit einem Einlassteil (**3, 5**) der Brennkraftmaschine (**1**) verbunden ist.

13. Trenner nach Anspruch 12, **dadurch gekennzeichnet, dass** jeder Strömungskanal (**9a, 9b, 9c, 9d, 9e, 9f**) einen Abgaszweigkanal (**8a, 8b, 8c, 8d, 8e, 8f**) und eine Auswahlvorrichtung (**10a, 10b, 10c, 10d, 10e, 10f**) aufweist,
wobei der Abgaszweigkanal (**8a, 8b, 8c, 8d, 8e, 8f**) nach außerhalb der Brennkraftmaschine (**1**) hin offen ist,
wobei die Auswahlvorrichtung (**10a, 10b, 10c, 10d, 10e, 10f**) zwischen einem ersten Zustand, in dem das Gas in dem Strömungskanal (**9a, 9b, 9c, 9d, 9e, 9f**) durch den Abgaszweigkanal (**8a, 8b, 8c, 8d, 8e, 8f**) ausgestoßen wird, und einem zweiten Zustand auswählt, in dem das Gas durch den Strömungskanal (**9a, 9b, 9c, 9d, 9e, 9f**) strömt,
wobei der Trenner weiterhin eine Auswahlsteuerungsvorrichtung (**15**) zur Steuerung des Auswahlvorgangs der Auswahlvorrichtung (**10a, 10b, 10c, 10d, 10e, 10f**) aufweist.

14. Trenner nach Anspruch 13, **dadurch gekennzeichnet, dass** jeder Strömungskanal (**9a, 9b, 9c, 9d, 9e, 9f**) eine Sauerstoffkonzentrationserfassungsvorrichtung (**22a, 22b, 22c, 22d, 22e, 22f**) zur Erfassung der Sauerstoffkonzentration in den in dem Strömungskanal (**9a, 9b, 9c, 9d, 9e, 9f**) strömenden Abgas aufweist,
wobei die Auswahlsteuerungsvorrichtung (**15**) die Auswahlvorrichtung (**10a, 10b, 10c, 10d, 10e, 10f**) auf der Grundlage der durch die Sauerstoffkonzentrationserfassungsvorrichtung (**22a, 22b, 22c, 22d, 22e, 22f**) erfassten Sauerstoffkonzentration betreibt.

15. Trenner nach einem der Ansprüche 6 bis 11, **dadurch gekennzeichnet, dass** das Gas in einer Brennkraftmaschine (1) erzeugt wird, und jeder Strömungskanal (**9a, 9b, 9c, 9d, 9e, 9f**) einen Abgaszweigkanal (**8a, 8b, 8c, 8d, 8e, 8f**) und eine Auswahlvorrichtung (**10a, 10b, 10c, 10d, 10e, 10f**) aufweist,
wobei der Abgaszweigkanal (**8a, 8b, 8c, 8d, 8e, 8f**) nach außerhalb der Brennkraftmaschine (**1**) hin offen ist,
wobei die Auswahlvorrichtung (**10a, 10b, 10c, 10d, 10e, 10f**) zwischen einem ersten Zustand, in dem das Gas in dem Strömungskanal (**9a, 9b, 9c, 9d, 9e, 9f**) durch den Abgaszweigkanal (**8a, 8b, 8c, 8d, 8e, 8f**) ausgestoßen wird, und einem zweiten Zustand auswählt, in dem das Gas durch den Strömungskanal (**9a, 9b, 9c, 9d, 9e, 9f**) strömt,
wobei der Trenner weiterhin eine Auswahlsteuerungsvorrichtung (**15**) zur Steuerung des Auswahlvorgangs der Auswahlvorrichtung (**10a, 10b, 10c, 10d, 10e, 10f**) aufweist.

## Revendications

1. Procédé de séparation de gaz qui comporte des corps diamagnétiques et des corps paramagnétiques contenant des oxydes d'azote et de l'oxygène dans des corps diamagnétiques, des oxydes d'azote et de l'oxygène, comprenant l'étape consistant à _{:}
prévoir un dispositif magnétique (11, 11a, 11b, 11c, 11d, 11e, 11f, 11g, 21, 21a, 21b, 21c, 21d, 21e, 21f) le long d'un passage de gaz (6) ;
le procédé étant **caractérisé en ce qu'**il comprend les étapes consistant à _{:}
prévoir une pluralité de passages d'écoulement (9a, 9b, 9c, 9d, 9e, 9f) le long d'une direction d'écoulement gazeux du passage de gaz à des intervalles, chaque passage d'écoulement ayant une extrémité qui est reliée séparément au passage de gaz (6), dans lequel chaque passage d'écoulement (9a, 9b, 9c, 9d, 9e, 9f) s'étend dans une direction dans laquelle une force due à un champ magnétique du dispositif magnétique (11, 11a, 11b, 11c, 11d, 11e, 11f, 21, 21a, 21b, 21c, 21d, 21e, 21f) est appliquée aux corps paramagnétiques dans le gaz ; et
laisser le gaz s'écouler dans les passages d'écoulement (9a, 9b, 9c, 9d, 9e, 9f) de manière à ce que des oxydes d'azote et de l'oxygène dans le gaz pénètrent dans des passages d'écoulement séparés parmi la pluralité des passages d'écoulement (9a, 9b, 9c, 9d, 9e, 9f).

2. Procédé selon la revendication 1, **caractérisé par** les étapes consistant à _{:}
détecter la vitesse d'écoulement du gaz ; et
régler l'intensité de champ magnétique du dispositif magnétique (11, 11a, 11b, 11c, 11d, 11e, 11f, 11g) le long du passage de gaz (6) en conformité avec la vitesse d'écoulement du gaz.

3. Procédé selon la revendication 1, **caractérisé par** les étapes consistant à _{:}
détecter la température du gaz ; et
régler l'intensité de champ magnétique du dispositif magnétique (11, 11a, 11b, 11c, 11d, 11e, 11f, 11g) le long du passage de gaz (6) en conformité avec la température du gaz.

4. Procédé selon l'une quelconque des revendications 1 à 3, **caractérisé par** le fait de refroidir le gaz avant de laisser le gaz s'écouler le long du dispositif magnétique (11, 11a, 11b, 11c, 11d, 11e, 11f, 11g, 21, 21a, 21b, 21c, 21d, 21e, 21f).

5. Procédé selon l'une quelconque des revendications 1 à 4, **caractérisé en que** le gaz est produit dans un moteur à combustion interne (1), dans lequel le procédé est **caractérisé par** une étape consistant à faire retourner des oxydes d'azote, de l'oxygène et des corps diamagnétiques indépendamment vers un côté d'admission (3, 5) du moteur à combustion interne (1).

6. Séparateur pour séparer du gaz qui comporte des corps diamagnétiques et des corps paramagnétiques contenant des oxydes d'azote et de l'oxygène dans des corps diamagnétiques, des oxydes d'azote et de l'oxygène,
dans lequel le séparateur comprend un passage de gaz (6), un dispositif magnétique (11, 11a, 11b, 11c, 11d, 11e, 11f, 11g, 21, 21a, 21b, 21c, 21d, 21e, 21f) et une pluralité de passages d'écoulement (9a, 9b, 9c, 9d, 9e, 9f), et
dans lequel le dispositif magnétique (11, 11a, 11b, 11c, 11d, 11e, 11f, 11g, 21, 21a, 21b, 21c, 21d, 21e, 21f) engendre un champ magnétique le long du passage de gaz (6),
**caractérisé en ce que** :
chacun des passages d'écoulement (9a, 9b, 9c, 9d, 9e, 9f) prévus le long d'une direction d'écoulement gazeux du passage de gaz à des intervalles a une extrémité qui est reliée séparément au passage de gaz (6), dans lequel chaque passage d'écoulement (9a, 9b, 9c, 9d, 9e, 9f) s'étend dans une direction dans laquelle une force due au champ magnétique du dispositif magnétique (11, 11a, 11b, 11c, 11d, 11e, 11f, 11g, 21, 21a, 21b, 21c, 21d, 21e, 21f) est appliquée aux corps paramagnétiques dans le gaz.

7. Séparateur selon la revendication 6, **caractérisé en ce que** le dispositif magnétique est composé d'un électro-aimant (11, 11a, 11b, 11c, 11d, 11e, 11f, 11g),
dans lequel le séparateur comprend, en outre, un dispositif de détection de la vitesse d'écoulement (15) et un dispositif de réglage de l'intensité du champ magnétique (15),
dans lequel le dispositif de détection de la vitesse d'écoulement (15) détecte la vitesse d'écoulement du gaz dans le passage de gaz (6),
dans lequel le dispositif de réglage de l'intensité du champ magnétique (15) règle l'intensité du champ magnétique de l'électro-aimant (11, 11a, 11b, 11c, 11d, 11e, 11f, 11g) le long du passage de gaz (6), sur la base de la vitesse d'écoulement du gaz.

8. Séparateur selon la revendication 6, **caractérisé en ce que** le dispositif magnétique est composé d'un électro-aimant (11, 11a, 11b, 11c, 11d, 11e, 11f, 11g),
dans lequel le séparateur comprend, en outre, un dispositif de détection de la température (15) et un dispositif de réglage de l'intensité du champ magnétique (15),
dans lequel le dispositif de détection de la température (15) détecte la température du gaz dans le passage de gaz (6),
dans lequel le dispositif de réglage de l'intensité du champ magnétique (15) règle l'intensité du champ magnétique de l'électro-aimant (11, 11a, 11b, 11c, 11d, 11e, 11f, 11g) le long du passage de gaz (6), sur la base de la température du gaz.

9. Séparateur selon l'une quelconque des revendications 6 à 8, **caractérisé en ce qu'**un second passage d'écoulement (30a, 30b, 30c) est formé de telle manière qu'une direction d'écoulement du second passage d'écoulement (30a, 30b, 30c) est opposée à une direction d'écoulement des passages d'écoulement (9a, 9b, 9c, 9d, 9e, 9f).

10. Séparateur selon l'une quelconque des revendications 6 à 9, **caractérisé en ce que** le passage de gaz (6) ou une partie du passage de gaz est composé (e) d'une forme non linéaire.

11. Séparateur selon l'une quelconque des revendications 6 à 10, **caractérisé en ce qu'**un refroidisseur (12) est prévu dans le passage de gaz (6) en amont du dispositif magnétique (11, 11a, 11b, 11c, 11d, 11e, 11f, 11g, 21, 21a, 21b, 21c, 21d, 21e, 21f, 21g).

12. Séparateur selon l'une quelconque des revendications 6 à 11, **caractérisé en ce que** le gaz est produit dans un moteur à combustion interne (1) et le passage de gaz est un passage d'échappement (6),
dans lequel une extrémité du passage d'échappement (6) est reliée au moteur à combustion interne (1) et l'autre extrémité du passage d'échappement (6) se ramifie en un premier passage de dérivation (7a) et un second passage de dérivation (7b),
dans lequel le premier passage de dérivation (7a) se situe plus près des passages d'écoulement (9a, 9b, 9c, 9d, 9e, 9f) que le second passage de dérivation (7b),
dans lequel le premier passage de dérivation (7a) est raccordé à un élément d'admission (3, 5) du moteur à combustion interne (1).

13. Séparateur selon la revendication 12, **caractérisé en ce que** chaque passage d'écoulement (9a, 9b, 9c, 9d, 9e, 9f) comporte un passage de dérivation d'échappement (8a, 8b, 8c, 8d, 8e, 8f) et un dispositif de sélection (10a, 10b, 10c, 10d, 10e, 10f),
dans lequel le passage de dérivation d'échappement (8a, 8b, 8c, 8d, 8e, 8f) est ouvert vers l'extérieur du moteur à combustion interne (1),
dans lequel le dispositif de sélection (10a, 10b, 10c, 10d, 10e, 10f) sélectionne entre un premier état où le gaz dans le passage d'écoulement (9a, 9b, 9c, 9d, 9e, 9f) est déchargé au travers du passage de dérivation d'échappement (8a, 8b, 8c, 8d, 8e, 8f) et un second état où le gaz s'écoule au travers du passage d'écoulement (9a, 9b, 9c, 9d, 9e, 9f),
dans lequel le séparateur comprend en outre un dispositif de commande de sélection (15) destiné à commander l'opération de sélection du dispositif de sélection (10a, 10b, 10c, 10d, 10e, 10f).

14. Séparateur selon la revendication 13, **caractérisé en ce que** chaque passage d'écoulement (9a, 9b, 9c, 9d, 9e, 9f) comporte un dispositif de détection de concentration d'oxygène (22a, 22b, 22c, 22d, 22e, 22f) destiné à détecter la concentration d'oxygène dans le gaz d'échappement s'écoulant dans le passage d'écoulement (9a, 9b, 9c, 9d, 9e, 9f),
dans lequel le dispositif de commande de sélection (15) actionne le dispositif de sélection (10a, 10b, 10c, 10d, 10e, 10f) sur la base de la concentration d'oxygène détectée par le dispositif de détection de concentration d'oxygène (22a, 22b, 22c, 22d, 22e, 22f).

15. Séparateur selon l'une quelconque des revendications 6 à 11, **caractérisé en ce que** le gaz est produit dans un moteur à combustion interne (1) et chaque passage d'écoulement (9a, 9b, 9c, 9d, 9e, 9f) comporte un passage de dérivation d'échappement (8a, 8b, 8c, 8d, 8e, 8f) et un dispositif de sélection (10a, 10b, 10c, 10d, 10e, 10f),
dans lequel chaque passage de dérivation d'échappement (8a, 8b, 8c, 8d, 8e, 8f) est ouvert vers l'extérieur du moteur à combustion interne (1),
dans lequel le dispositif de sélection (10a, 10b, 10c, 10d, 10e, 10f) sélectionne entre un premier état où le gaz dans le passage d'écoulement (9a, 9b, 9c, 9d, 9e, 9f) est déchargé au travers du passage de dérivation d'échappement (8a, 8b, 8c, 8d, 8e, 8f) et un second état où le gaz s'écoule au travers du passage d'écoulement (9a, 9b, 9c, 9d, 9e, 9f),
dans lequel le séparateur comprend en outre un dispositif de commande de sélection (15) destiné à commander l'opération de sélection du dispositif de sélection (10a, 10b, 10c, 10d, 10e, 10f).
